# EUROPEAN PATENT SPECIFICATION

(11) **EP 3 683 070 B1**
(45) Date of publication and mention of the grant of the patent: **20.04.2022**
(21) Application number: 19152613.6
(22) Date of filing: 18.01.2019
(51) Int. Cl.: B60D 1/06, B60D 1/52, B60D 1/60, B60D 1/58

(54) **PARTS FOR A DETACHABLE TRAILER HITCH AND TRAILER HITCH**
TEILE FÜR EINE ABNEHMBARE ANHÄNGERKUPPLUNG SOWIE ANHÄNGERKUPPLUNG
ELEMENTS POUR ATTELAGE DE REMORQUE AMOVIBLE ET ATTELAGE DE REMORQUE

(43) Date of publication of application: 22.07.2020
(73) Proprietor: ACPS Automotive GmbH, 74379 Ingersheim (DE)
(72) Inventor: Földesi, Bernát, 3910 Tokaj (HU); Recker, Dirk, 71696 Möglingen (DE)
(74) Representative: Hoeger, Stellrecht & Partner Patentanwälte mbB

(56) References cited:
- FR-A1- 2 426 583
- US-A1- 2012 049 484
- US-A1- 2014 070 518
- US-A1- 2017 158 147
- US-B1- 6 193 261
- US-B1- 6 260 874
- US-B1- 6 874 806
- Lars Steinbrügger: "Tasche zur Aufbewahrung des abnehmbaren Kugelkopfes - bei Rameder", , 3 August 2015 (2015-08-03), XP055598696, Retrieved from the Internet: URL:https://www.kupplung.de/tasche-zur-auf bewahrung-des-abnehmbaren-kugelkopfes-1240 14.html [retrieved on 2019-06-24]

## Description

The invention refers to parts of a detachable trailer hitch comprising a detachable ball neck as well as a receiver having a receiver channel in which the detachable ball neck can be mounted with a mounting member, such as for example at least one of a hood, a cap member and a detachable ball neck or a detachable trailer with itself.

Detachable trailer hitches have the problem that detached ball neck causes contamination and/or pollution of objects in the surroundings of the detached ball neck and also contamination and/or pollution of the receiver.

The invention refers to a hood for a mounting member of a detachable ball neck with which mounting member the detachable ball neck can be fixed in a receiver fixedly mounted on a car wherein the hood is closed at its first end and extends from said first end to a second end thereby compassing an interior space and wherein said second end is provided with an access opening through which said mounting member can be inserted into said interior space. Such hoods are generally known as optional accessories for a detachable ball neck member and described for example in document US 2017/158147 A1.

It is the object of this invention to avoid wiping away grease remaining on the outer side of that mounting member when inserted into said hood.

This object is achieved by the hood according to claim 1 as well as the interrelated cap member according to claim 6.

In principal, the hood as defined before could be made of a grid material or another material having openings so that there would be no full protection of said mounting member.

According to the invention, said hood is provided with side walls extending from said first end to said second end, which side walls are adapted to prevent contact with the mounting member and objects in the surrounding of said detached ball neck.

Said access opening is the only opening through which said interior space is accessible for said mounting member so that introducing said mounting member through said access opening into said interior space is the only possibility for a user for storing said mounting member and avoids misuse of said hood.

Further, it is of advantage if said hood comprises a closed hood body extending from said access opening and fully encompassing said interior space.

In particular, said hood can be of any shape.

An advantageous solution provides that said hood with said interior space is adapted to receive at least a pin portion of said mounting member.

It is even more advantageous if said hood with said interior space is adapted to receive in addition to said pin portion protrusions of said mounting member arranged on opposite sides of said pin portion so that all elements relevant for proper and secure mounting of the mounting member can be introduced into said interior space and therefore covered and protected by said hood against contact with objects in the environment of the detached ball neck.

In order to reduce the volume of said hood and the volume of said interior space it is of advantage if said hood comprises a central hood portion providing a central interior space for receiving at least said pin portion. Further it is of advantage in order to reduce the volume of said central hood portion if said hood comprises lateral extensions arranged on opposite sides of said central hood portion for widening additional interior space for receiving said protrusions.

In this design the volume of the hood is optimized because said central hood portion has to be only designed to receive the pin portion whereas the lateral extensions are designed to only receive the protrusions of said mounting member.

In general the hood can be made of any material.

It is of particular advantage if said hood is formed of a molded material so that the hood can be easily formed into desired shape.

Said hood is formed of plastic material which is a lightweight material which affects the weight of the detachable trailer hitch to a neglectable degree.

In order to further optimize the shape of the hood the hood is provided with a curved lower rim on opposite sides thereof said curved lower rim extending between said lateral extensions.

With this design the hood can be provided with a shape which even protects the mounting member in an area which is below said protrusions.

In particular, it is of advantage if said curved lower rim runs adjacent to the access opening or even limits at least opposite sections of said access opening.

According to the invention, said hood is provided with ribs extending in said interior space and arranged to abut said mounting member when inserted into said interior space.

The advantage of this solution is that the hood body itself has not to be adapted to the shape of said mounting member because the adaption to the mounting member is obtained by the design of the ribs.

These ribs have contoured sections adapted to areas of an outer contour of said mounting member to be inserted into said interior space so that said ribs with their contoured sections adapted to areas of the outer contour of said mounting member support the hood with respect to said mounting member.

In order not to wipe away the grease remaining on the outer side of said mounting member, said ribs provide a free space between said hood body and said pin portion of said mounting member so that the grease which is necessary for proper inserting and mounting said mounting member in said receiver is kept in place.

Further, it is of advantage if said ribs provide a free space between said hood body and said protrusions of said mounting member in order to also maintain the grease on said protrusions when the mounting member is inserted into said hood.

The invention further refers to a cap member for a receiver of a detachable trailer hitch with which a receiving channel on the receiver can be closed in case the mounting member of the detachable ball neck of said detachable trailer hitch is removed from said receiver.

Said cap member comprises a base section adapted to close the receiving channel of the receiver.

In order to fix said cap member in said receiver an advantageous solution provides said cap member with fingers extending from said base section further into said receiving channel for fixing said cap member in said receiving channel.

Said fingers for example can be provided to obtain a fixing of said cap member by force locking in said receiving channel.

However, it is of advantage if said fingers comprise snap fit bodies for providing a snap fit between said fingers and a recess arranged in said receiving channel.

In principle, said recess in said receiving channel could be a recess separate from the groove for locking the mounting member in said receiver.

An advantageous concept provides that said snap fit bodies are designed to enter a groove provided in said receiving channel for receiving locking balls of said mounting member for locking said mounting member within said receiver. In order to fully protect said receiver it is of advantage if said base section of said cap member is provided with lateral protrusions adapted to enter into the recesses arranged on opposite sides of said receiving channel in said receiver and provided for receiving corresponding protrusions of said mounting member of said detachable ball neck.

This solution has the advantage that the lateral protrusions of said cap member also protect said recesses in said receiver.

To further protect the receiving channel of said receiver by fully covering said insert opening an advantageous solution provides that said base section is provided with a cover rim adapted to a contour of an insert opening of said receiver.

A further version of said cap member comprises pull flanges extending beyond said base section or said lateral protrusion for enabling easy removal of said cap member from said receiver.

An advantageous version comprises pull flanges arranged on said lateral protrusions and in particular extending away from said lateral protrusions on sides of said lateral protrusions opposite to said base section.

A further improved version of said cap member comprises retraces arranged on said base section for providing a gap between said base section and said receiving channel enabling drainage of residual material or moisture from inside said receiving channel through said gap to the outside of the receiver.

In particular such retraces are arranged in the area of a transition of a cover rim of a said base section and a foot portion of said base section.

The invention further refers to a hood cap unit comprising a hood according to at least one of the embodiments described before and the cap member according to at least one of the embodiments as described before wherein said hood and said cap member are both designed such that the cap member can be inserted through the access opening of said hood into said interior space of said hood and fixed in said interior space.

This solution has the advantage that in case the detachable ball neck is attached to the receiver and fixed therein the hood and the cap member are not parts which have to be stored separately for being used later on again when detaching the detachable ball neck so that there is a high risk of losing one of these parts whereas according to the present invention the hood-cap-unit enables to keep both parts together.

According to a preferred solution said cap member is fixed in said hood by force locking.

Force locking can be obtained in different ways.

One advantageous solution provides that said force locking of said cap member is achieved by interaction between areas of the base section of said cap member and sections of ribs extending in said receiving space of said hood.

With this solution the ribs which are provided in the hood for positioning the hood relative to said mounting member can also be used for providing the force locking between the hood and the cap member.

According to a further advantageous embodiment said hood and said cap member are designed such that said cap member essentially closes said access opening of said hood so that in case the hood and the cap member are unified to the hood-cap-unit the interior space within said hood is protected against any kind of pollution or any entry of particles by said cap member.

In order to provide said hood cap unit with the ability to be properly positioned on a plane surface one advantageous solution provides that in case said cap member is inserted and fixed in said cap and said hood can be supported by a common plane surface so that the hood-cap-unit has the ability to stand alone on a plane surface which makes it easier to store the hood cap unit at a proper place.

The inventive solution also refers to a detachable trailer hitch comprising a receiver fixedly mounted on a body of a car and a ball neck having a mounting member which can be inserted and fixed in a receiver channel and detached from said receiver channel of said receiver wherein said detachable trailer hitch comprises a hood according to at least one of the embodiments described before and/or a cap member according to at least one of the cap members as described before and wherein in particular said hood and said cap member can be combined to at least one of said hood cap units as described before.

Further features and advantages are disclosed in connection with the following drawings and the detailed specification.

In the drawings:

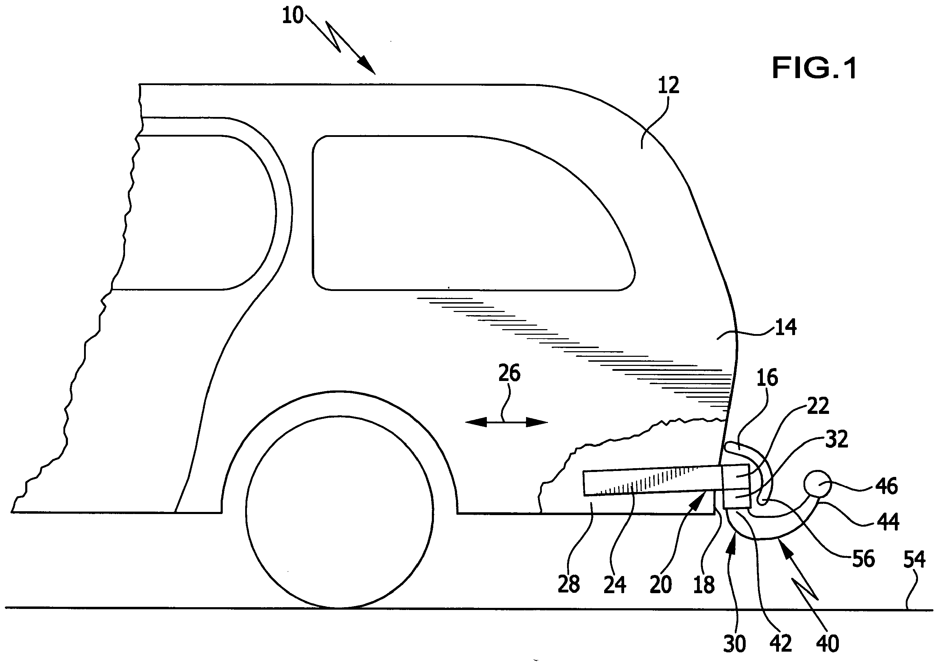

- Fig. 1: shows a side view of a car provided with a detachable trailer hitch according to the present invention;
- Fig. 2: shows a perspective view of a first embodiment of a trailer hitch according to the present invention;
- Fig. 3: shows a sectional view along line 3-3 in fig. 4;
- Fig. 4: shows a rear view of the trailer hitch in direction of arrow A in fig. 2;
- Fig. 5: shows the sectional view according to fig. 3 through a receiver according to the first embodiment with a mounting member of a detachable ball neck remove;
- Fig. 6: shows a sectional view along line 6-6 in fig. 5;
- Fig. 7: shows a side view of a directional ball neck according to the first embodiment corresponding to fig. 3 without receiver;
- Fig. 8: shows a rearview of the detached ball neck according to arrow B in fig. 7;

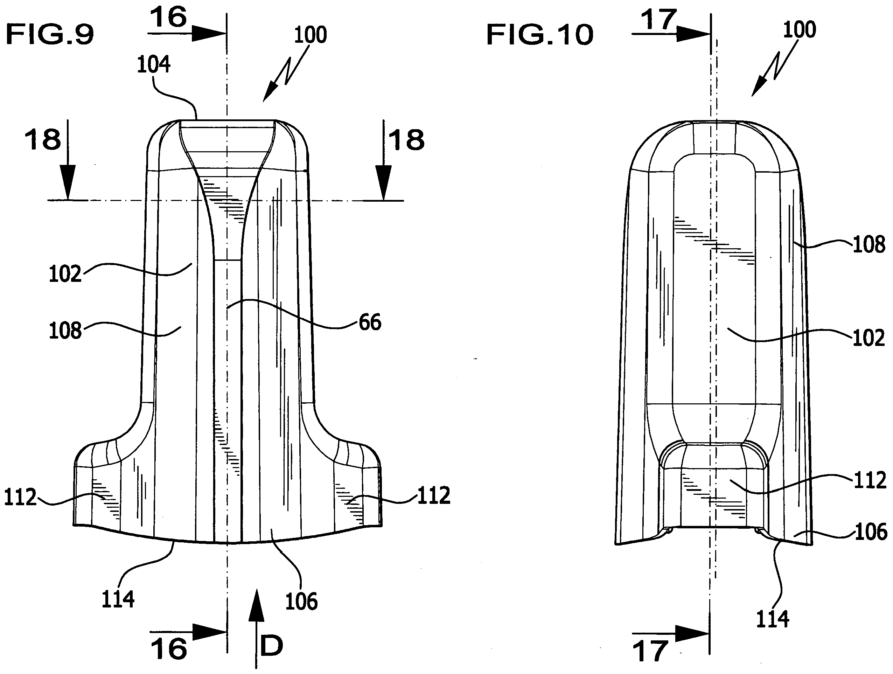

- Fig. 9: shows a front view of a hood according to the first embodiment of the present invention;
- Fig. 10: shows a side view of the hood according to the present invention;

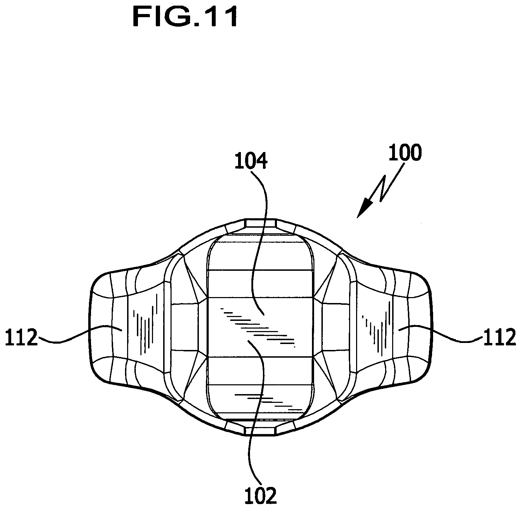

- Fig. 11: shows a top view of the hood according to the present invention;

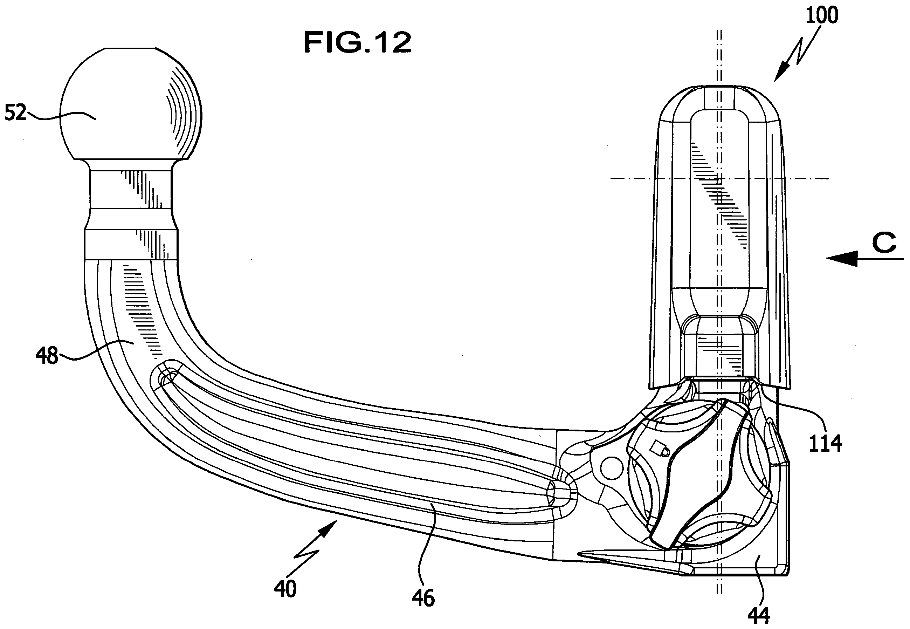

- Fig. 12: shows a hood mounted on the detached ball neck;

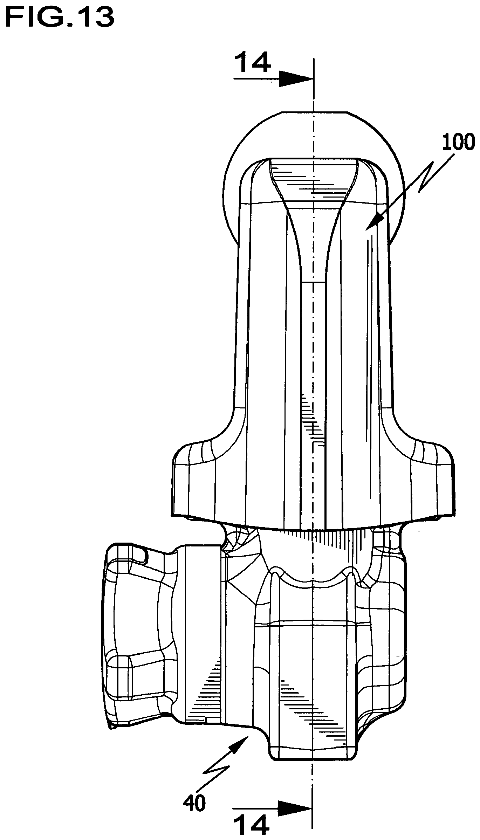

- Fig. 13: shows a U of the detached ball neck with hood 100 in direction of arrow C in fig. 12;

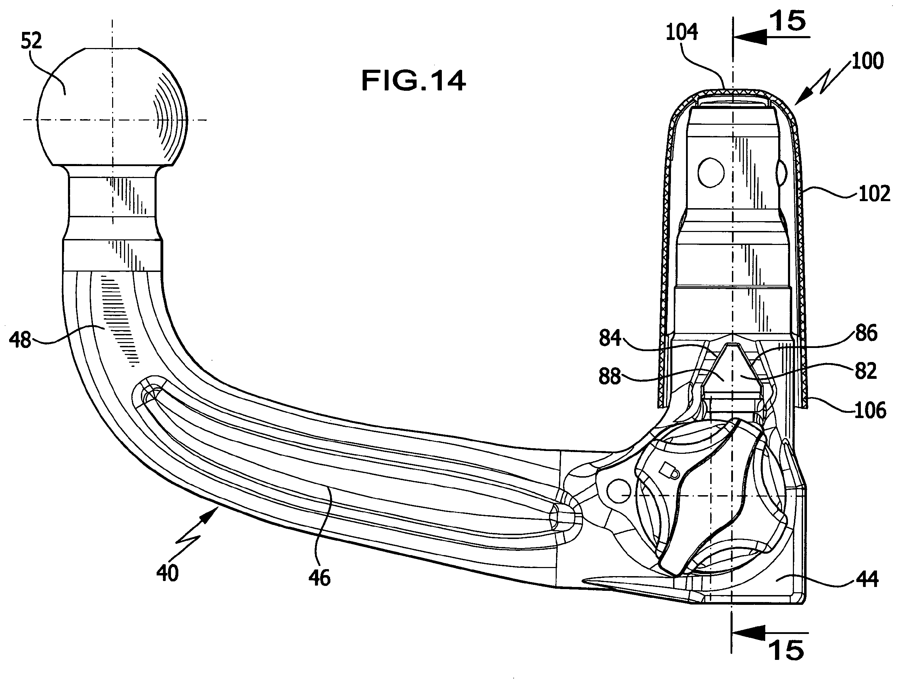

- Fig. 14: shows a sectional view along line 14-14 in fig. 13;

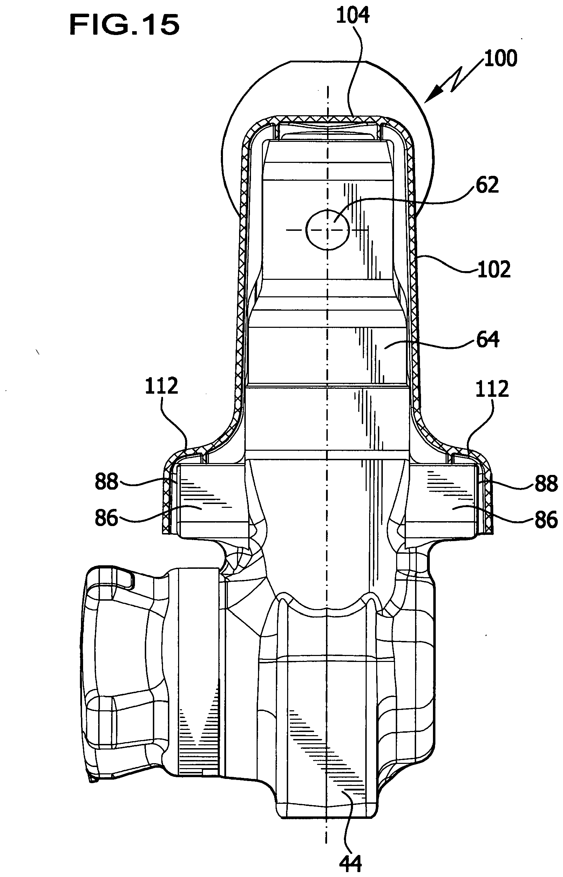

- Fig. 15: shows a sectional view along line 15-15 in fig. 14;
- Fig. 16: shows a sectional view along line 16-16 in fig. 9;
- Fig. 17: shows a sectional view along line 17-17 in fig. 10;
- Fig. 18: shows a sectional view along line 18-18 in fig. 9;
- Fig. 19: shows a bottom view in direction of arrow D in fig. 9;

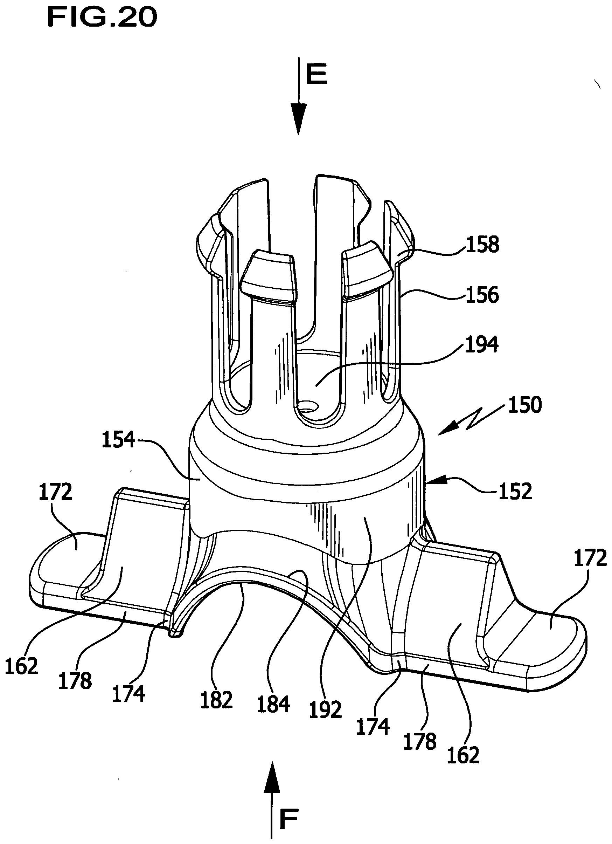

- Fig. 20: shows a perspective view of a cap member according to the first embodiment of the present invention;

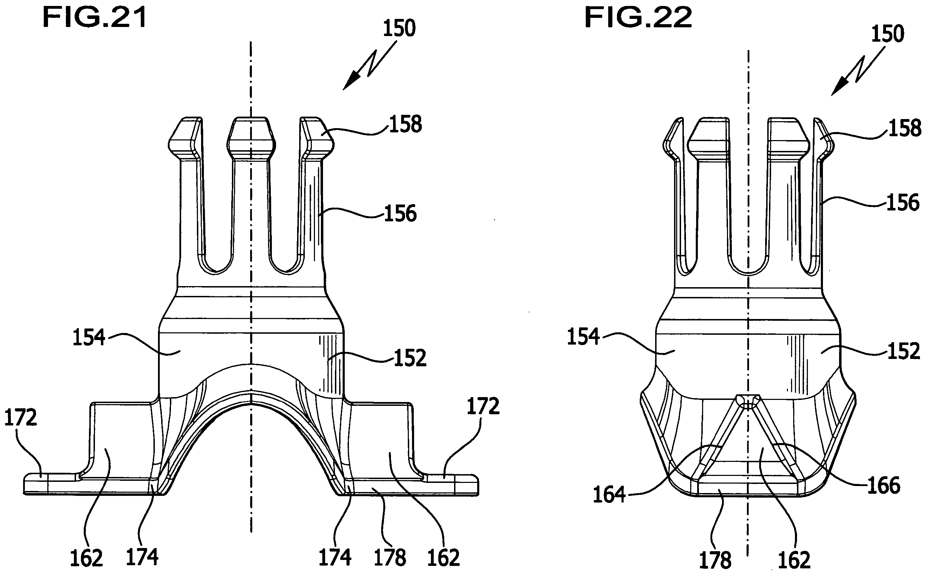

- Fig. 21: shows a front view of the cap member;
- Fig. 22: shows a side view of the cap member;

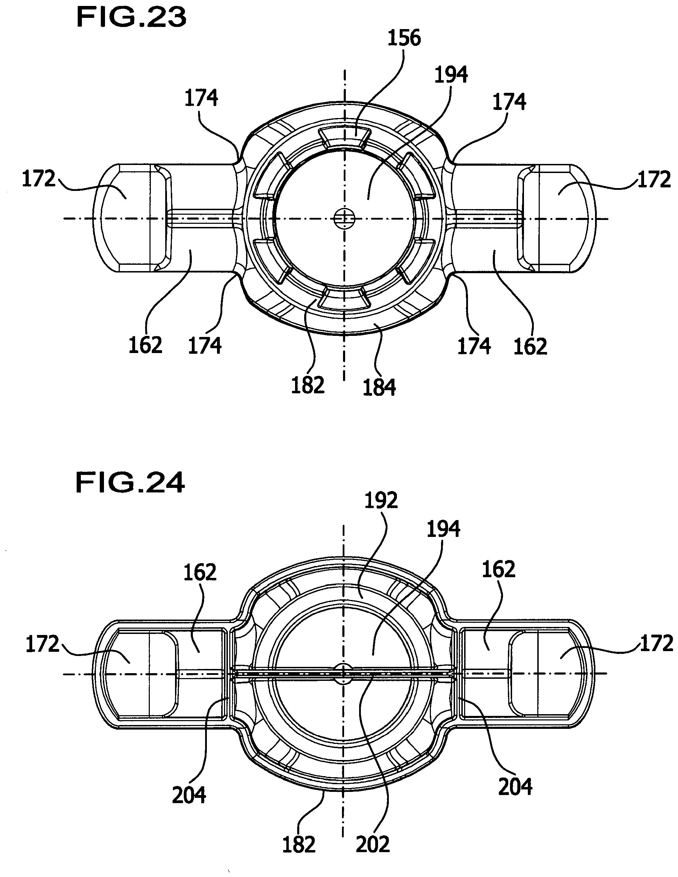

- Fig. 23: shows a top view of the cap member along arrow E in fig. 20;
- Fig. 24: shows a bottom view in direction of arrow F in fig. 20;
- Fig. 25: shows a front view of the receiver according to the first embodiment with the cap member inserted;
- Fig. 26: shows a bottom view of the receiver with the cap member inserted according to arrow G in fig. 25;

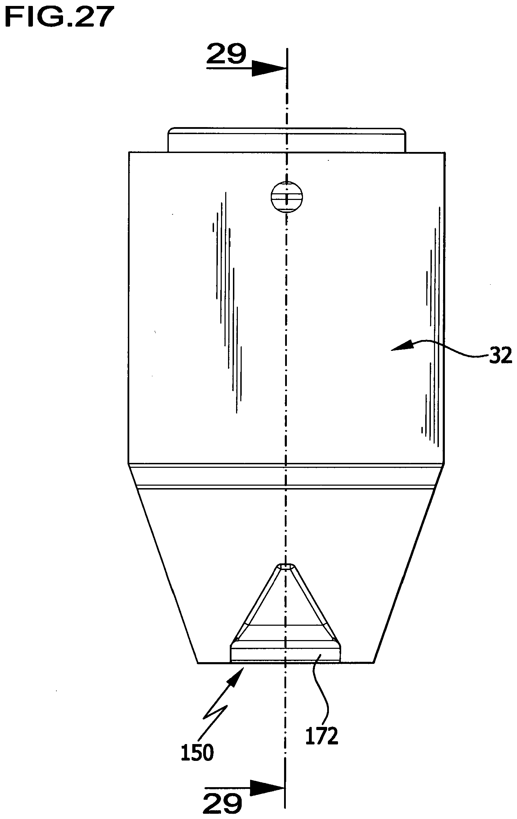

- Fig. 27: shows a side view of the receiver 32 with the cap member inserted;
- Fig. 28: shows a sectional view along line 28-28 in fig. 25;
- Fig. 29: shows a sectional view along line 29-29 in fig. 27;

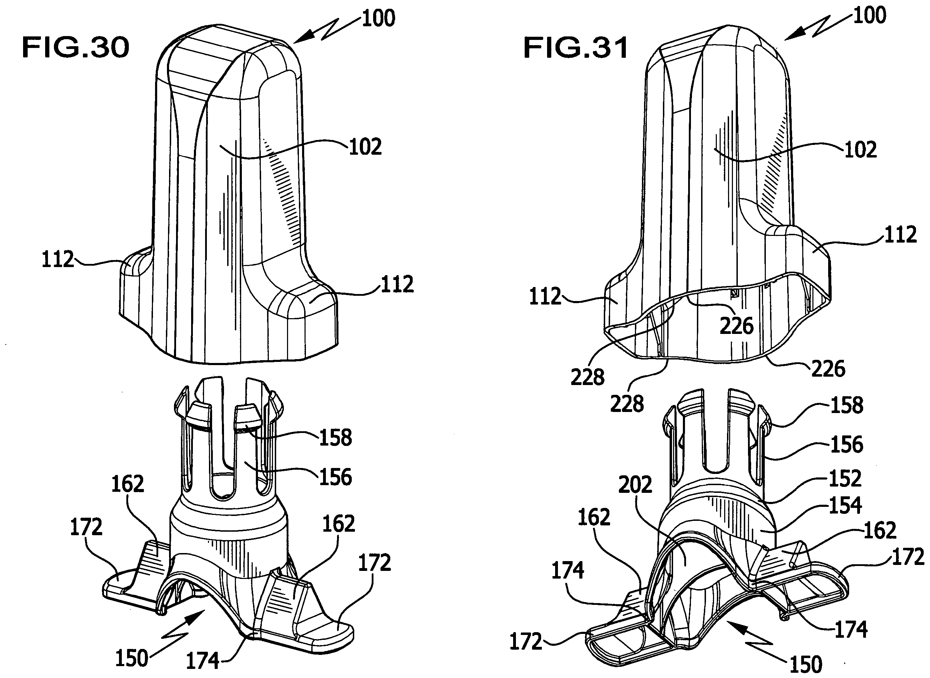

- Fig. 30: shows an exploded perspective representation of the hood according to the first embodiment of the present invention and the cap member according to the first embodiment of the present invention before the combination to a hood-cap-unit;
- Fig. 31: shows a perspective view similar to fig. 30 from a perspective from below;
- Fig. 32: shows a perspective view of the hood-cap-unit according to the present invention;
- Fig. 33: shows a front view of the hood-cap-unit;
- Fig. 34: shows a side view of the hood-cap-unit;
- Fig. 35: shows a sectional view along line 35-35 in fig. 33;
- Fig. 36: shows a sectional view along line 36-36 in fig. 34;

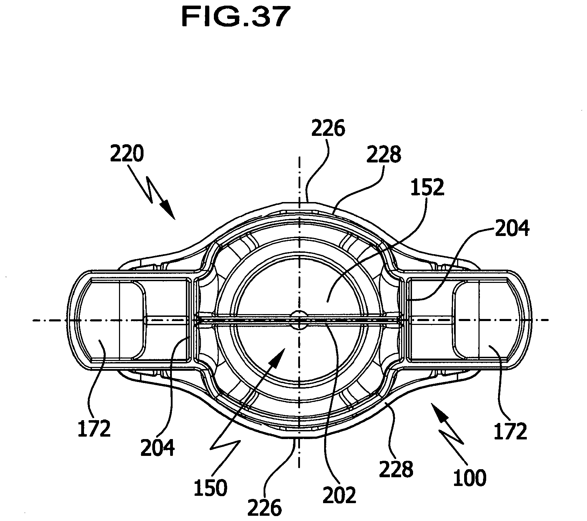

- Fig. 37: shows a bottom view of the hood-cap-unit along arrow H in fig. 32;
- Fig. 38: shows a sectional view similar to the sectional view in fig. 14 of a hood according to a second embodiment of the present invention.

A car having reference numeral 10, in particular a passenger car, comprises a body 12 having a tail 14 provided with a bumper 16.

At the lower portion of tail 14 of body 12 there is fixed a trailer hitch carrier 20 comprising a cross member 22 which is arranged between a rear side 18 of tail 14 and bumper 16 as well as covered by bumper 16 so that the cross member 22 is invisible for a person standing behind the car.

Cross member 22 can be either fixed directly to rear side 18 of body 14, for example via flanges, or fixed to tail 14 by side members 24 extending parallel to a longitudinal direction 26 of body 12 which side members 24 are preferably fixed to longitudinal wall portions 28 of tail 14.

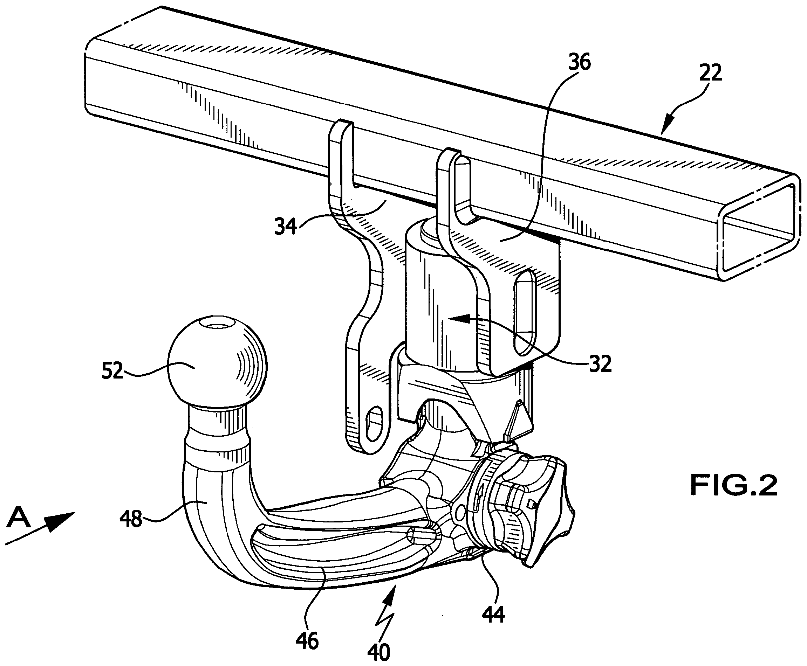

Cross member 22 itself carries a detachable trailer hitch 30 comprising a receiver 32 fixed to cross member 22 by two connecting members 34 and 36 fixed to receiver 32 on opposite sides thereof for example by welding and also fixed to cross member 22 preferably by welding (fig. 2).

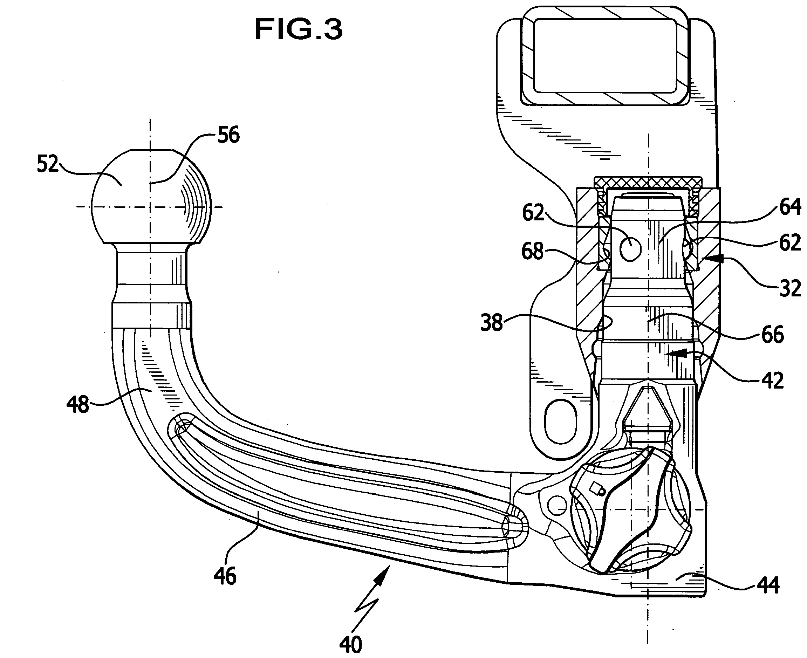

Further detachable trailer hitch 30 comprises a detachable ball neck 40 which, as shown for example in fig. 3, comprises a mounting member 42 which can be detachably inserted into an insert opening 50 of a receiver channel 38 of receiver 32 and locked therein as described later.

Mounting member 42 when inserted and locked in receiver 32 extends beyond receiver 32 to an actuator section 44 of ball neck 40 and from actuator section 44 there extends an elongated ball neck section 46 to which a curved ball neck section 48 is adjoined which curved ball neck section 48 carries a coupling ball 52.

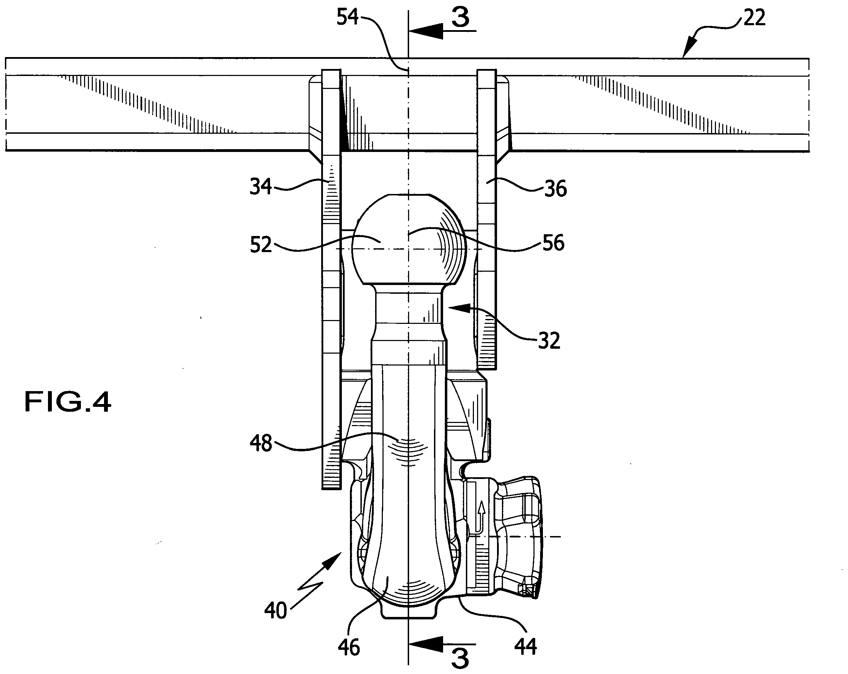

As for example shown in fig. 4 ball neck sections 46 and 48 extend in a vertical longitudinal central plane 54 of body 12 and coupling ball 52 with its central axis 56 is extending in central plane 54.

Mounting member 42 can be locked within receiver 32 by locking balls 62 moveably guided in a pin portion 64 of mounting member 42 and moveable in a radial direction to central axis 66 of mounting member 42 in order to lock mounting member 42 by extending into a groove or recess 68 arranged an inner side of receiving channel 38 of receiver 32 in which pin portion 64 is extending when mounting member 42 is to be fixed and locked in sleeve 32 (fig. 3).

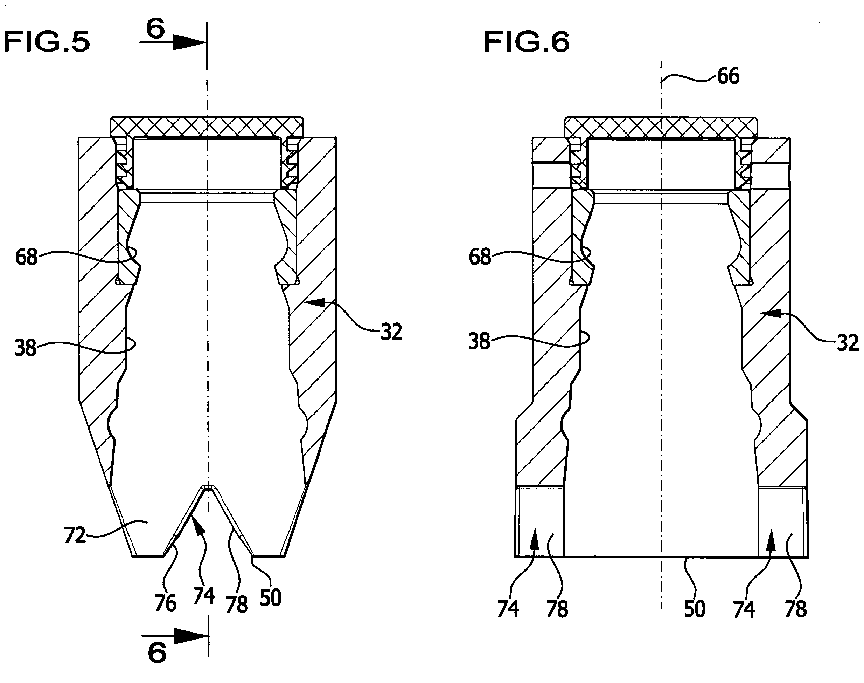

Receiver 32 is not only provided with receiving channel 38 and with groove 68 but receiver 32 is also in a lower section 72 extending towards actuator section 44 of detachable ball neck 40 provided with recesses 74 having surfaces 76 and 78 which are arranged with respect to each other to form an inverted V (fig. 5, 6).

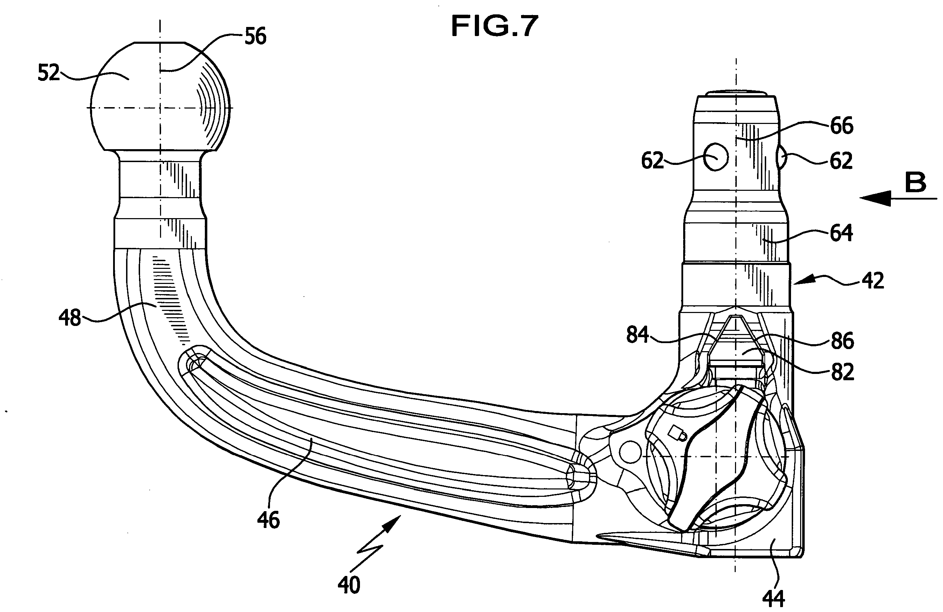

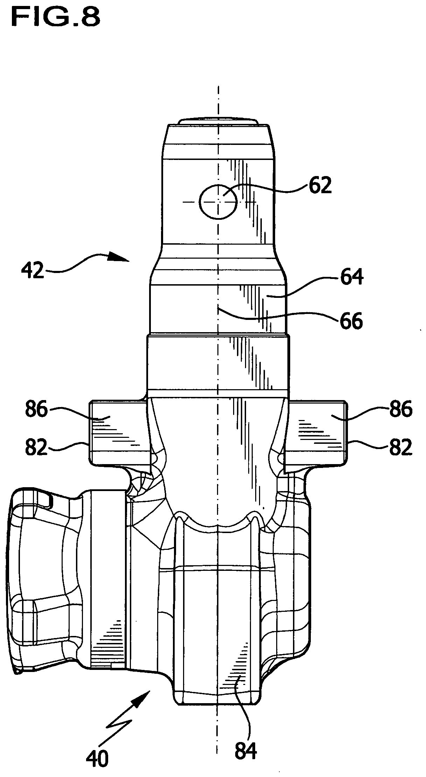

Recesses 74 are arranged on opposite sides of central axis 66 of receiver 32 and are designed to receive protrusions 82 arranged on opposite sides of pin portion 64 and extending from both sides thereof up to outer ends 88 and protrusions 82 are provided with shoulders 84 and 86 which are arranged outside pin portion 64 and adapted to abut on surfaces 76 and 78 of recesses 74 (fig 7 to 8).

The protrusions 82 are arranged such that in case pin portion 64 is inserted into receiving channel 38 and locked by locking balls 62 extending into grooves 68 the protrusions 82 are inserted into recesses 74 and shoulders 84 and 86 are tightly abutting on surfaces 76 and 78 of recesses 74 so that mounting member 42 is fixed in receiver 32 and unable to move in direction of central axis 66 and rotate about central axis 66 and consequently mounting portion 42 is fixed essentially without play in receiver 32.

The disadvantage of a detachable trailer hitch 30 as disclosed before is that pin portion 64 is provided with grease in order to obtain proper operation of locking balls 62 so that storing detachable ball neck 40 when detached from receiver 32 on one hand causes pollution or contamination of the surrounding and on the other hand insert opening 50 of receiver 32 with detachable ball neck 40 removed allows dirt and water from the road to enter into receiving channel 38 with the result that in case detachable ball neck 40 with mounting member 42 is again to be inserted positioning of proper positioning of pin portion 64 in receiving channel 38 as well as protrusions 82 in recesses 74 can be unsettled or deranged so that proper locking of mounting portion 42 with locking balls 62 could be prevented.

For these reasons the object of the present invention is to provide a detachable trailer hitch 30 which does not show the aforementioned deficits.

In order to protect mounting member 42 of detachable ball neck 40 a hood 100 is provided having a hood body 108. Hood 100 is closed at a first end 104 and extending from first end 104 to a second end 106 with side walls 108.

Preferably hood 100 has lateral extensions 112 adjoining a central portion 102 close to second end 106 so that hood 100 at its second end 106 is provided with an access opening 114 to interior space 116 which is encompass by hood 100.

Access opening 114 has dimensions which enable hood 100 to receive mounting member 42 with pin portion 64 as well as receiving protrusions 82 together with their shoulders 84 and 86. In particular protrusions 82 extend into lateral extensions 112. In particular in case hood 100 is receiving mounting section 44 lower opening 114 is arranged in an area between protrusions 82 and actuator section 44.

Lateral extensions 112 are not only covering shoulders 84 and 86 but also covering outer ends 88 of protrusions 82 being arranged opposite to pin portion 64 and in particular provide support for manually pushing hood 100 on pin portion 64 in order to cover and protect pin portion 100.

For proper positioning of hood 100 with respect to pin portion 64 and protrusions 82 central portion 102 of hood 100 is provided with ribs 122 extending preferably in planes parallel to central axis 66 and having an inner contour 124 which is at least in sections adapted to the outer contour of pin portion 64.

Further, central portion 102 is provided with ribs 126 extending in a plane transverse to central plane 54 and having an inner contour 128 which is at least in sections adapted to outer contour of pin portion 64.

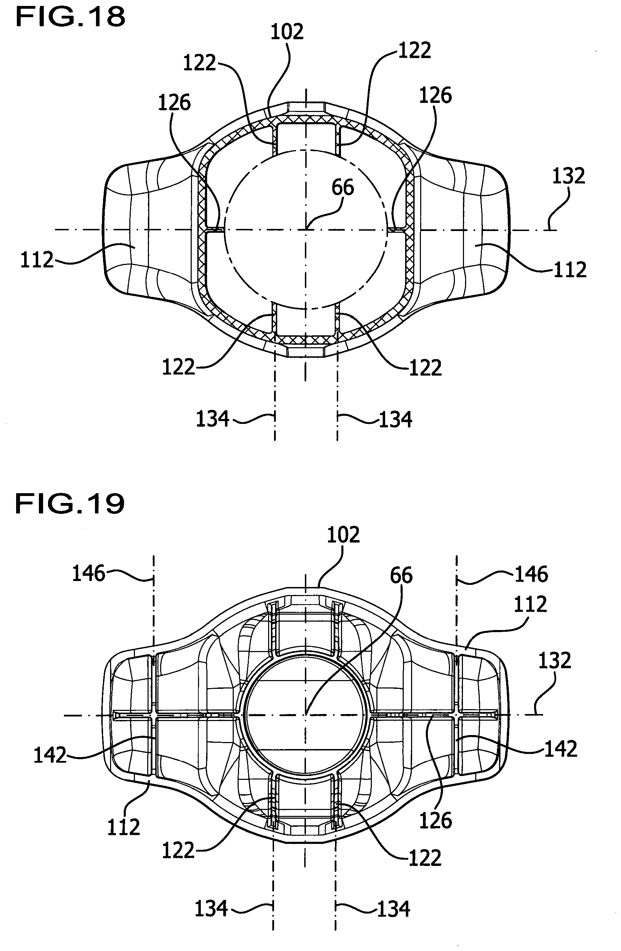

In particular ribs 126 are arranged in a plane 132 extending through central axis 66 whereas ribs 122 are extending in parallel planes 134 which are extending parallel to central axis 66 but at a distance from central axis 66 as shown in figs. 18 and 19.

Further side extensions 112 are provided with ribs 142 with inner contours 144 adapted to the shape of shoulders 84 and 86 and extending in planes 146 parallel to planes 134.

For closing insert opening 50 of receiver 32 a cap member 150 is provided.

Cap member 150 comprises a base section 152 having a press fit section 154 which is to be inserted into receiving channel 38.

Base section 152 carries fingers or beams 156 extending upwards from base section 152 and having snap fit bodies 158 at their ends.

Snap fit body 158 are designed to provide a snap fit connection between cap member 150 and groove 68 of receiver 32.

Base section 152 is further provided on opposite sides with lateral protrusions 162 having a shape similar to protrusions 82 so that lateral protrusions 162 of base section 152 can enter recesses 74 of receiver 32, in particular lateral protrusions have surfaces 164, 166 having dimensions identical or similar to shoulders 84 and 86.

Further, cap member 150 is provided with pull flanges 172 extending beyond lateral protrusions 162 so that pull flanges 172 can be used to pull cap member 150 out of receiver 32.

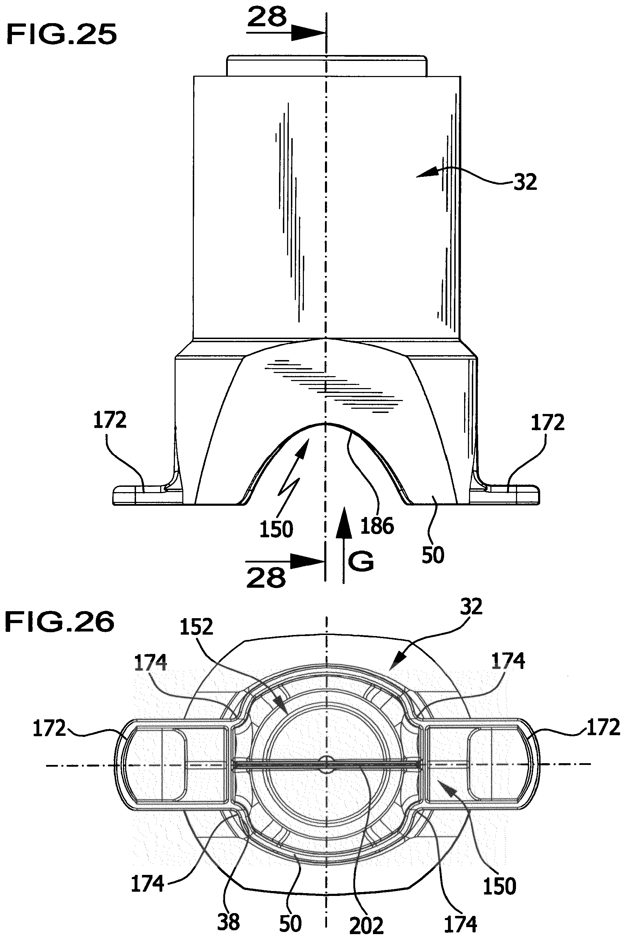

In particular pull flanges 172 are designed such that they extend beyond the outer contour of receiver 32 in case cap member 150 is inserted into receiver 32 as shown in figs. 25 and 26.

Preferably, base member 152 has an outer contour which deviates from the contour of receiving channel 38 at lower opening 50 by a retrace 174, arranged at the transition between base section 152 and lateral protrusions 162 so that through such a retrace 174 residual moisture and dirt can drain out of receiving channel 38. In particular such a retrace 174 is arranged at any transition between base section 152 and lateral protrusions 162.

Further, base section 152 is provided with a central closure portion 182 closing lower opening 50 of receiver 32 in the area between lateral protrusions 162.

For example central closure portion 182 is provided with a cover rim 184 adapted in shape to a contour 186 of lower opening 50 of receiver 32 which in the present example has the shape of a curved cutout.

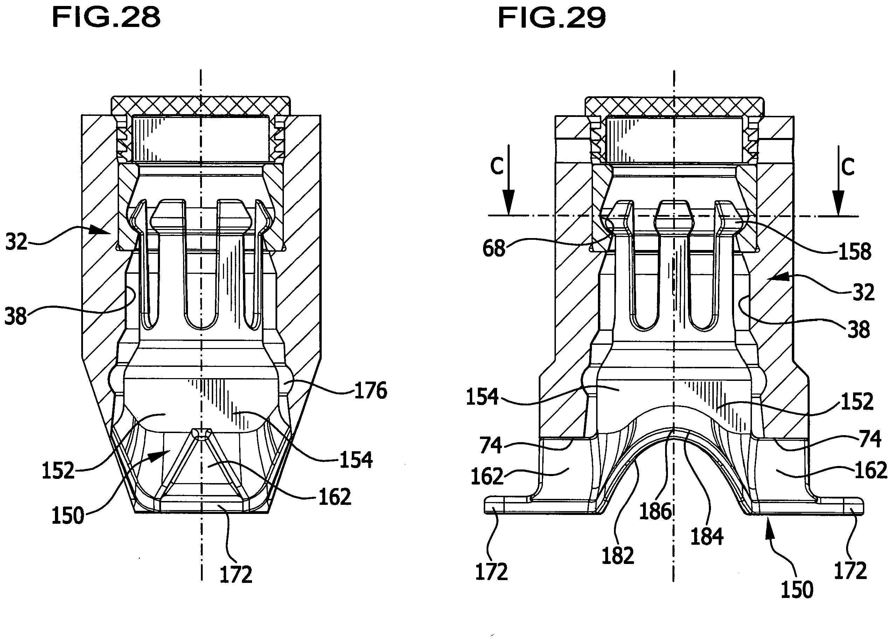

When inserted into receiver 32 cap member 150 closes insert opening 50 of receiver 32 with central closure portion 182 having cover rim 184 arranged to adjoin the contour 186 of insert opening 50 and by lateral protrusions 162 extending into recesses 74 of receiver 32 and closing recesses 74, as for example shown in figs. 28 and 29.

In particular, central closure portion 182 in the area of cover rim 184 is designed such that cover rim 184 is curved from its top at the center when extending downwards towards retraces 174 arranged at a transition of said cover rim 184 to a foot portion 178 of said base section 152 so that vibrations during driving of the car cause residual material within receiver channel 38 to get off the surfaces and are led towards retraces 174 in order to drain through retraces 174 out of receiving channel 38 to the outside.

Base section 152 of cap member 150 with its press fit section 154 is designed to leave a gap 176 between press fit section 154 and inner surface of receiving channel 38 of receiver 32 in order to avoid possible residual material blocking when cap member 152 is inserted.

Further pull flanges 172 extend beyond receiver 32 so that they are easily accessible to be griped by a person for removing cap member 150 from receiver 32.

Preferably cap member 150 is fixed in receiver 32 by cooperating with grove 68 of receiver 32.

In particular, lateral protrusions 162 as well as central closure portion 182 with cover rim 184 are adjoined to base section 152, in particular an outer wall 190 of press fit section 154 is connected to a cover portion 194 closing the central area within outer wall 192.

For reinforcing cap member 150 base member 152 is provided with a rib 202 inside base section 152 and ribs 204 adjoining rib 202 in the area of lateral protrusions 162.

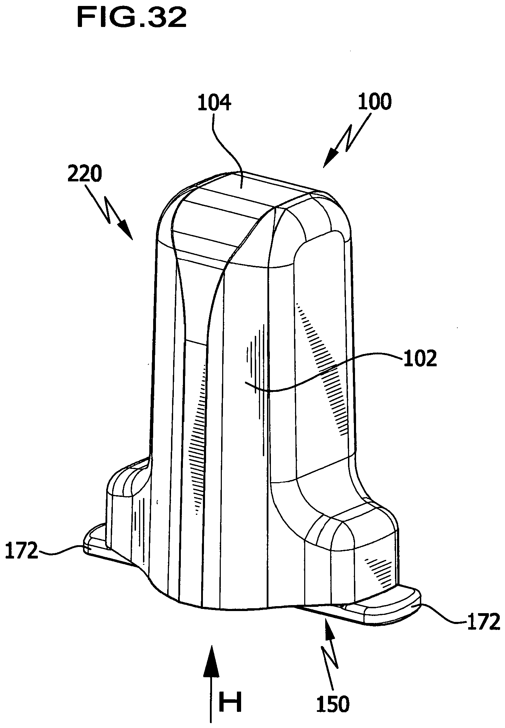

A preferred embodiment does not only provide use of hood 100 for covering mounting member 42 of detachable ball neck 40 as well as use of cap member 150 for closing lower opening 50 of receiver 32 when the detachable ball neck 40 is detached but also enables in case the detachable ball neck 40 is inserted and in particular locked with its mounting member 42 in receiver 32 to combine hood 100 with cap member 150 to a unit as shown in fig. 32 for example by inserting cap member 150 into the interior of hood 100 in the same manner as inserting mounting member 42 into hood 100.

As a consequence hood 100 and cap member 150 are not separate parts so that one of them can be lost or mislaid but are combined hood-cap-unit 220 in which both hood 100 and cap member 150 are unified and which has the ability to stand upright on a plane surface 222.

This is possible by the fact that on one hand pull flanges 172 which also extend beyond lateral hood extensions 112 are designed to define a common bottom plane and by the fact that lower end 106 of hood 100 is designed such that in the hood-cap-unit 220 the central rim sections 226 of central hood portion 102 extend down towards bottom plane 224 so that these rim sections 226 support hood-cap-unit 220 on opposite sides of base section 152 of cap member 150.

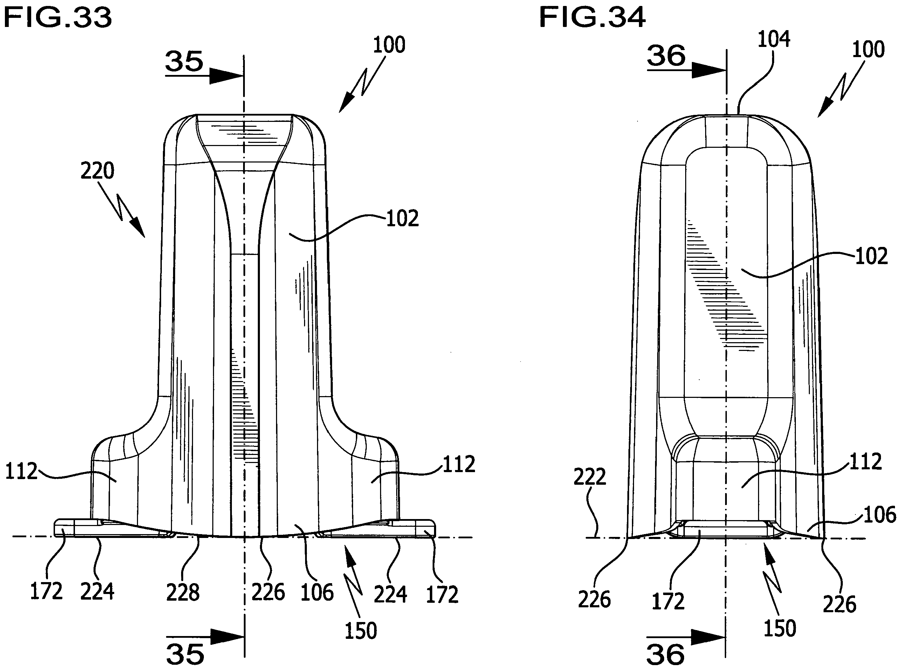

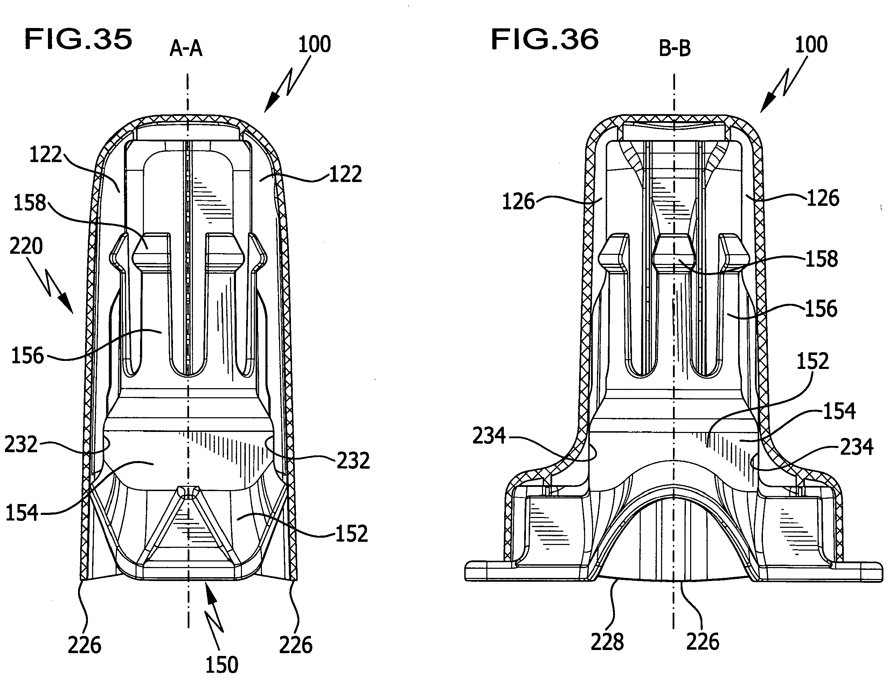

In particular, lower rim section 226 is part of a curved lower rim 228 extending from one lateral hood extension 112 to the other lateral hood extension so that hood 100 with curved lower rim 228 would not properly stand on surface 222 whereas in case cap member 150 is inserted into hood 100 the resulting hood-cap-unit 220 will properly stand on surface 222 as for example shown in figs. 33 and 36.

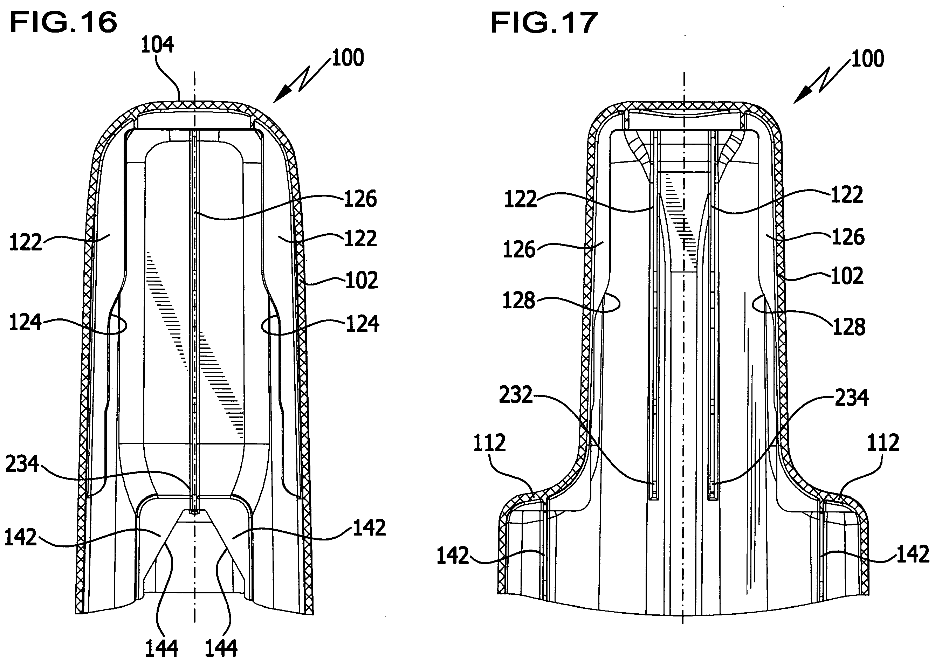

The relative fixing of cap member 150 in hood 100 is preferably achieved by a contact between press fit section 154 being essentially cylindrical with a press fit section 232 of ribs 122 and a press fit section 234 of ribs 126, which press fit sections can be best seen in figs. 16 and 17 for example.

In the same manner as in case of cap member 150 inserted into receiver 32 cap member 150 can be easily removed from hood 100 to separate the hood-cap-unit 220 by gripping pull flanges 172 on one hand and holding hood 100, for example in its central hood portion 102 on the other hand.

In particular, the arrangement of ribs 122 and ribs 126 within hood 100 is adapted such that these ribs 122, 126 do not interfere with fingers 156 of cap member 150 so that there is no interaction between fingers 156 and snap fit bodies 158 arranged thereon in case cap member 150 is inserted into hood 100.

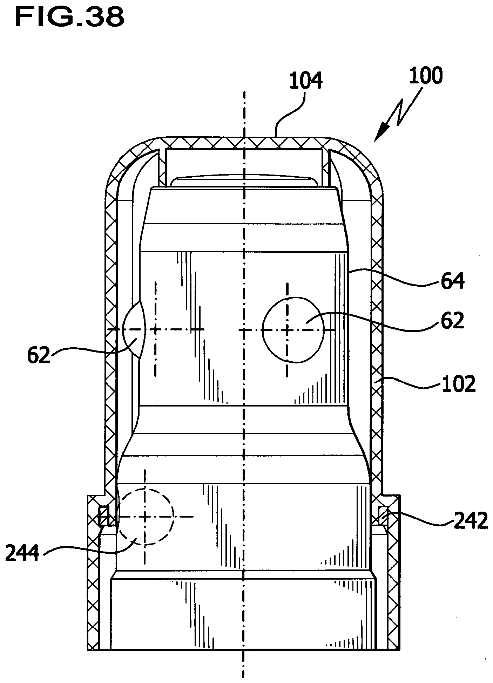

In a second embodiment as shown for example in fig. 38 hood 100 is provided with a stiffener ring 242 which for example is made of a stiff material, such as for example metal or carbon fibers so that central hood portion 102 is provided with increased stiffness. If for example hood 100 is pushed on pin portion 64 and the locking system of pin portion 64 is not locked the increased stiffness of hood 100 due to stiffener ring 241 provides support for a triggering ball 244 to push such triggering ball 244 in its radially inward position in which triggering ball enables locking system to move into its locking position in which locking balls 62 are pushed radially outwardly in order to enter their locking position so that hood 100 can only be placed properly on pin portion 64 if the locking system is in its locking position.

Stiffening ring 242 can for example be fixed to hood 100 by insert molding or any other process if hood 100 in particular is made of any polymer material.

The fact that stiffening ring 242 is covered by a polymer layer prevents unnecessary friction between the stiffening ring 242 and pin portion 64 as well as triggering ball 244 and provides a smooth sliding of hood 100 over pin portion 64 and triggering ball 244.

## Claims

1. A hood (100) for a mounting member (42) of a detachable ball neck (40) with which mounting member (42) the detachable ball neck (40) can be fixed in a receiver (32) being fixedly mounted on a car (10), wherein said hood is formed of plastic material, wherein the hood (100) is closed at a first end (104) and extends from said first end (104) to a second end (106) thereby encompassing an interior space (116), wherein said hood (100) is provided with side walls (108) extending from said first end (104) to said second end and thereby enclosing said interior space (116), and wherein said second end (106) is provided with an access opening (114) through which said mounting member (42) can be inserted into said interior space (116), wherein said access opening (116) is the only opening (114) through which said interior space (116) is accessible for said mounting member (42), and wherein said hood (100) is provided with ribs (122, 126, 142) extending in said interior space (116) and arranged to abut on said mounting member (42) when inserted into said interior space (116), wherein said ribs (122, 126, 142) have contoured sections adapted to an outer contour of said mounting member (42) to be inserted into said interior space (116), wherein said ribs (122, 126) provide a free space between said hood body (108) and said pin portion (64) of said mounting member (42).

2. Hood according to claim 1, wherein said hood (100) comprises a closed hood body (108) extending from said access opening (114) in a closed manner and fully encompassing said interior space (116).

3. Hood according to one of the preceding claims, wherein said hood (100) with said interior space (116) is adapted to receive at least a pin portion (64) of said mounting member (42), wherein in particular said hood (100) with said interior space (116) is adapted to receive in addition to said pin portion (64) protrusions (82) of said mounting member (42) arranged on opposite sides of said pin portion (64), wherein in particular said hood (100) is provided with a central hood portion (102) providing a central interior space for receiving at least said pin portion (64), and/or wherein in particular said hood (100) is provided with lateral extensions (112) providing additional interior space for receiving said protrusions (82).

4. Hood according to one of the preceding claims, wherein said hood (100) is provided with a curved lower rim on opposite sides thereof said curved lower rim extending between said lateral extensions (112).

5. Hood according to one of the preceding claims, wherein in particular said ribs (142) provide a free space between said hood body (108) and said protrusions (82) of said mounting member (42).

6. Cap member (150) for a receiver (32) of a detachable trailer hitch (30) with which a receiving channel (38) of the receiver (32) can be closed in case a mounting member (42) of a detachable ball neck (40) is removed from said receiver (32), wherein said cap member (150) comprises a base section (152) adapted to close the receiving channel (38) of the receiver (32), and wherein said cap member comprises a press fit section (154) providing a contact with a press fit section (232, 234) of ribs (122, 126) of the hood (100) according to one of the preceding claims for relative fixing of said cap member (150).

7. Cap member (150) according to claim 6, wherein said cap member (150) comprises pull flanges (172) extending beyond said base section (152) for enabling easy removal of said cap member from said receiver.

8. Cap member according to claim 6 or 7, wherein in particular said cap member (150) is provided with fingers (156) extending from said base section (152) further into said receiving channel (38) for fixing said cap member (150) in said receiving channel (38), wherein in particular said fingers (156) are provided with a snap fit bodies (158) for providing a snap fit between said fingers (156) and a recess (68) arranged in said receiving channel (38), wherein in particular said snap fit bodies (158) are designed to enter a groove (68) provided in said receiving channel (38) for receiving locking balls (62) of said mounting member (42) for locking said mounting member (42) within said receiver (32).

9. Cap member according to claims 6 to 8, wherein said base section (152) of said cap member (150) is provided with lateral protrusions (162) adapted to enter into recesses (74) arranged on opposite sides of said receiving channel (38) of said receiver (32) and provided for receiving corresponding protrusions (82) of said mounting member (42) of said detachable ball neck (40), and/or wherein in particular said base section (152) is provided with a cover rim (184) adapted to the contour of an insert opening (50) of said receiver (32), wherein in particular said cap member (150) comprises pull flanges (172) extending beyond said lateral protrusions (182) for enabling easy removal of said cap member (150) from said receiver (32), and/or wherein in particular said cap member (150) comprises pull flanges (172) arranged on said lateral protrusions (182) and in particular extending away from said lateral protrusions (182) on sides of said lateral protrusions (182) opposite to said base section (152).

10. Cap member according to one of claims 6 to 9, wherein said cap member (150) comprises retraces (174) arranged on said base section (152) for providing a gap between said base section (152) and said receiving channel (38) enabling drainage of residual material or moisture from inside said receiving channel through said gap to the outside of the receiver (38), wherein in particular said retraces (174) are arranged in the area of a transition of a cover rim (184) of a said base section (152) and a foot portion (178) of said base section (152).

11. Hood-cap-unit comprising a hood (100) according to at least one of claims 1 to 5 and a cap member (150) according to at least one of claims 6 to 10, wherein said hood (100) and said cap member (150) are both designed such that the cap member (150) can be inserted through access opening (114) into said interior space (116) of said hood (100) and fixed in said interior space (116) and wherein said cap member (150) is fixed in said hood (100) by force locking.

12. Hood-cap-unit according to claim 11, wherein in particular said force locking of said cap member (150) is achieved by interaction between the base section (152) of said cap member (150) and sections of ribs (122, 126) extending in said receiving space (116) of said hood (100).

13. Hood-cap-unit according to claim 11 or 12, wherein said hood (100) and said cap member (150) are designed such that said cap member (150) essentially closes said access opening (114) of said hood (100).

14. Hood-cap-unit according to one of claims 11 to 13, wherein in case said cap member (150) is inserted and fixed in said hood (100) said cap (150) and said hood (100) can be supported by a common plane surface (222).

15. A detachable trailer hitch (30) comprising a receiver (32) fixedly mounted on a body (12) of a car (10) and a ball neck (40) having a mounting member (42) which can be inserted and fixed in a receiver channel (38) and detached from said a receiver channel (38) of said receiver (32), wherein said detachable trailer hitch (30) comprises a hood (100) according to at least one of claims 1 to 5 and/or a cap (150) according to claims 6 to 10, and wherein in particular said hood (100) and said cap (150) can be combined to at least one of said hood-cap-unit (220) according to claims 11 to 14.

## Patentansprüche

1. Haube (100) für ein Befestigungselement (42) eines abnehmbaren Kugelhalses (40), wobei mit dem Befestigungselement (42) der abnehmbare Kugelhals (40) in einer Aufnahme (32) befestigt werden kann, welche fest an einem Fahrzeug (10) befestigt ist, wobei die Haube aus Kunststoff gebildet ist, wobei die Haube (100) an einem ersten Ende (104) geschlossen ist und sich von dem ersten Ende (104) zu einem zweiten Ende (106) erstreckt, wodurch sie einen Innenraum (116) umfasst, wobei die Haube (100) mit Seitenwänden (108) versehen ist, die sich von dem ersten Ende (104) zu dem zweiten Ende erstrecken und dabei den Innenraum (116) umschließen, und wobei das zweite Ende (106) mit einer Zugangsöffnung (114) versehen ist, durch welche das Befestigungselement (42) in den Innenraum (116) eingeführt werden kann, wobei die Zugangsöffnung (116) die einzige Öffnung (114) ist, durch welche der Innenraum (116) für das Befestigungselement (42) zugänglich ist, und wobei die Haube (100) mit Rippen (122, 126, 142) versehen ist, die sich in den Innenraum (116) erstrecken und die so angeordnet sind, dass sie an dem Befestigungselement (42) anliegen, wenn dieses in den Innenraum (116) eingeführt wird, wobei die Rippen (122, 126, 142) profilierte Abschnitte aufweisen, die an ein äußeres Profil des in den Innenraum (116) einzuführenden Befestigungselements (42) angepasst sind, wobei die Rippen (122, 126) für einen Freiraum zwischen dem Haubenkörper (108) und dem Stiftabschnitt (64) des Befestigungselements (42) sorgen.

2. Haube nach Anspruch 1, bei der die Haube (100) einen geschlossenen Haubenkörper (108) aufweist, der sich von der Zugangsöffnung (114) in einer geschlossenen Weise erstreckt und den Innenraum (116) vollständig umfasst.

3. Haube nach einem der vorhergehenden Ansprüche, bei der die Haube (100) mit dem Innenraum (116) zum Aufnehmen wenigstens eines Stiftabschnitts (64) des Befestigungselements (42) ausgelegt ist, wobei insbesondere die Haube (100) mit dem Innenraum (116) dafür ausgelegt ist, zusätzlich zu dem Stiftabschnitt (64) auf gegenüberliegenden Seiten des Stiftabschnitts (64) angeordnete Vorsprünge (82) des Befestigungselements (42) aufzunehmen, wobei insbesondere die Haube (100) mit einem zentralen Haubenabschnitt (102) versehen ist, der für einen zentralen Innenraum zum Aufnehmen zumindest des Stiftabschnitts (64) sorgt, und/oder wobei insbesondere die Haube (100) mit seitlichen Erweiterungen (112), welche für zusätzlichen Innenraum zum Aufnehmen der Vorsprünge (82) sorgen, versehen ist.

4. Haube nach einem der vorhergehenden Ansprüche, bei der die Haube (100) auf gegenüberliegenden Seiten derselben mit einem gekrümmten unteren Rand versehen ist, wobei sich der gekrümmte untere Rand zwischen den seitlichen Erweiterungen (112) erstreckt.

5. Haube nach einem der vorhergehenden Ansprüche, bei der insbesondere die Rippen (142) für einen Freiraum zwischen dem Haubenkörper (108) und den Vorsprüngen (82) des Befestigungselements (42) sorgen.

6. Kappenglied (150) für eine Aufnahme (32) einer abnehmbaren Anhängerkupplung (30), mit der ein Aufnahmekanal (38) der Aufnahme (32) verschlossen werden kann, wenn ein Befestigungselement (42) eines abnehmbaren Kugelhalses (40) von der Aufnahme (32) entfernt wird, wobei das Kappenglied (150) einen Basisabschnitt (152) aufweist, der dafür ausgelegt ist, den Aufnahmekanal (38) der Aufnahme (32) zu verschließen, und wobei das Kappenglied einen Presspassungsabschnitt (154) aufweist, der für einen Kontakt mit einem Presspassungsabschnitt (232, 234) von Rippen (122, 126) der Haube (100) nach einem der vorhergehenden Ansprüche sorgt, um das Kappenglied (150) im Verhältnis zu fixieren.

7. Kappenglied (150) nach Anspruch 6, bei dem das Kappenglied (150) Zugflansche (172) aufweist, die sich über den Basisabschnitt (152) hinaus erstrecken, um die leichte Entfernung des Kappenglieds von der Aufnahme zu ermöglichen.

8. Kappenglied nach Anspruch 6 oder 7, bei dem insbesondere das Kappenglied (150) mit Fingern (156) versehen ist, die sich von dem Basisabschnitt (152) weiter in den Aufnahmekanal (38) erstrecken, um das Kappenglied (150) in dem Aufnahmekanal (38) zu fixieren, wobei insbesondere die Finger (156) mit Schnappverbindungskörpern (158) versehen sind, um eine Schnappverbindung zwischen den Fingern (156) und einer in dem Aufnahmekanal (38) angeordneten Aussparung (68) bereitzustellen, wobei insbesondere die Schnappverbindungskörper (158) so ausgebildet sind, dass sie in eine in dem Aufnahmekanal (38) vorgesehene Nut (68) zur Aufnahme von Verriegelungskugeln (62) des Befestigungselements (42) eintreten, um das Befestigungselement (42) in der Aufnahme (32) zu verriegeln.

9. Kappenglied nach den Ansprüchen 6 bis 8, bei dem der Basisabschnitt (152) des Kappenglieds (150) mit seitlichen Vorsprüngen (162) versehen ist, die dafür ausgelegt sind, in Ausnehmungen (74) einzutreten, welche auf gegenüberliegenden Seiten des Aufnahmekanals (38) der Aufnahme (32) angeordnet und zum Aufnehmen entsprechender Vorsprünge (82) des Befestigungselements (42) des abnehmbaren Kugelhalses (40) vorgesehen sind, und/oder wobei insbesondere der Basisabschnitt (152) mit einem Abdeckrand (184) versehen ist, der an das Profil einer Einführöffnung (50) der Aufnahme (32) angepasst ist, wobei insbesondere das Kappenglied (150) Zugflansche (172) aufweist, die sich über die seitlichen Vorsprünge (182) hinaus erstrecken, um ein einfaches Entfernen des Kappenglieds (150) von der Aufnahme (32) zu ermöglichen, und/oder wobei insbesondere das Kappenglied (150) Zugflansche (172) aufweist, die an den seitlichen Vorsprüngen (182) angeordnet sind und sich insbesondere auf Seiten der seitlichen Vorsprünge (182) gegenüber dem Basisabschnitt (152) von den seitlichen Vorsprüngen (182) weg erstrecken.

10. Kappenglied nach einem der Ansprüche 6 bis 9, bei dem das Kappenglied (150) Rücksprünge (174) aufweist, die an dem Basisabschnitt (152) angeordnet sind, um einen Spalt zwischen dem Basisabschnitt (152) und dem Aufnahmekanal (38) zu bilden, der das Abfließen von Restmaterial oder Feuchtigkeit aus dem Inneren des Aufnahmekanals durch den Spalt zur Außenseite der Aufnahme (38) ermöglicht, wobei insbesondere die Rücksprünge (174) im Bereich eines Übergangs eines Abdeckrandes (184) des Basisabschnitts (152) und eines Fußteils (178) des Basisabschnitts (152) angeordnet sind.

11. Hauben-Kappen-Einheit mit einer Haube (100) nach wenigstens einem der Ansprüche 1 bis 5 und mit einem Kappenglied (150) nach wenigstens einem der Ansprüche 6 bis 10, wobei sowohl die Haube (100) als auch das Kappenglied (150) so ausgelegt sind, dass das Kappenglied (150) durch eine Zugangsöffnung (114) in den Innenraum (116) der Haube (100) eingesetzt und in dem Innenraum (116) befestigt werden kann, und wobei das Kappenglied (150) in der Haube (100) mittels Kraftschluss fixiert ist.

12. Hauben-Kappen-Einheit nach Anspruch 11, bei der insbesondere der Kraftschluss des Kappenglieds (150) durch Wechselwirkung zwischen dem Basisabschnitt (152) des Kappenglieds (150) und sich in den Aufnahmeraum (116) der Haube (100) erstreckenden Abschnitten von Rippen (122, 126) erreicht wird.

13. Hauben-Kappen-Einheit nach Anspruch 11 oder 12, bei der die Haube (100) und das Kappenglied (150) so ausgelegt sind, dass das Kappenglied (150) die Zugangsöffnung (114) der Haube (100) im Wesentlichen verschließt.

14. Hauben-Kappen-Einheit nach einem der Ansprüche 11 bis 13, bei der in dem Fall, dass das Kappenglied (150) in die Haube (100) eingeführt und darin befestigt wird, die Kappe (150) und die Haube (100) von einer gemeinsamen ebenen Fläche (222) gestützt werden können.

15. Abnehmbare Anhängerkupplung (30) mit einer fest an einer Karosserie (12) eines Fahrzeugs (10) montierten Aufnahme (32) und einem Kugelhals (40), welcher ein Befestigungselement (42) aufweist, das in einen Aufnahmekanal (38) eingesetzt und darin befestigt, und aus einem Aufnahmekanal (38) der Aufnahme (32) entfernt werden kann, wobei die abnehmbare Anhängerkupplung (30) eine Haube (100) nach wenigstens einem der Ansprüche 1 bis 5 und/oder eine Kappe (150) nach den Ansprüchen 6 bis 10 beinhaltet, und wobei insbesondere die Haube (100) und die Kappe (150) zu wenigstens einer der Hauben-Kappen-Einheiten (220) nach den Ansprüchen 11 bis 14 kombiniert werden können.

## Revendications

1. Capot (100) pour un organe de montage (42) d'un col de boule amovible (40) avec lequel organe de montage (42) le col de boule amovible (40) peut être fixé dans un récepteur (32) qui est monté fixement sur une voiture (10), dans lequel ledit capot est constitué de matière plastique, dans lequel le capot (100) est fermé à une première extrémité (104) et s'étend depuis ladite première extrémité (104) jusqu'à une seconde extrémité (106) en enveloppant de ce fait un espace intérieur (116), dans lequel ledit capot (100) est pourvu de parois latérales (108) s'étendant depuis ladite première extrémité (104) jusqu'à ladite seconde extrémité et renfermant de ce fait ledit espace intérieur (116), et dans lequel ladite seconde extrémité (106) est pourvue d'une ouverture d'accès (114) à travers laquelle ledit organe de montage (42) peut être inséré dans ledit espace intérieur (116), dans lequel ladite ouverture d'accès (116) est la seule ouverture (114) à travers laquelle ledit espace intérieur (116) est accessible pour ledit organe de montage (42), et dans lequel ledit capot (100) est pourvu de nervures (122, 126, 142) s'étendant dans ledit espace intérieur (116) et agencées pour venir en butée contre ledit organe de montage (42) lorsqu'il est inséré dans ledit espace intérieur (116), dans lequel lesdites nervures (122, 126, 142) ont des sections profilées adaptées à un contour extérieur dudit organe de montage (42) à insérer dans ledit espace intérieur (116), dans lequel lesdites nervures (122, 126) fournissent un espace libre entre ledit corps de capot (108) et ladite portion de broche (64) dudit organe de montage (42).

2. Capot selon la revendication 1, dans lequel ledit capot (100) comprend un corps de capot fermé (108) s'étendant depuis ladite ouverture d'accès (114) d'une manière fermée et enveloppant complètement ledit espace intérieur (116).

3. Capot selon l'une des revendications précédentes, dans lequel ledit capot (100) avec ledit espace intérieur (116) est apte à recevoir au moins une portion de broche (64) dudit organe de montage (42), dans lequel en particulier ledit capot (100) avec ledit espace intérieur (116) est apte à recevoir, en plus de ladite portion de broche (64), des saillies (82) dudit organe de montage (42) agencées sur des côtés opposés de ladite portion de broche (64), dans lequel en particulier ledit capot (100) est pourvu d'une portion de capot centrale (102) fournissant un espace intérieur central pour recevoir au moins ladite portion de broche (64), et/ou dans lequel en particulier ledit capot (100) est pourvu d'extensions latérales (112) fournissant un espace intérieur supplémentaire pour recevoir lesdites saillies (82).

4. Capot selon l'une des revendications précédentes, dans lequel ledit capot (100) est pourvu d'un rebord inférieur incurvé sur des côtés opposés de celui-ci, ledit rebord inférieur incurvé s'étendant entre lesdites extensions latérales (112).

5. Capot selon l'une des revendications précédentes, dans lequel en particulier lesdites nervures (142) fournissent un espace libre entre ledit corps de capot (108) et lesdites saillies (82) dudit organe de montage (42).

6. Organe de recouvrement (150) pour un récepteur (32) d'un attelage de remorque amovible (30) avec lequel un canal de réception (38) du récepteur (32) peut être fermé dans le cas où un organe de montage (42) d'un col de boule amovible (40) est enlevé dudit récepteur (32), dans lequel ledit organe de recouvrement (150) comprend une section de base (152) apte à fermer le canal de réception (38) du récepteur (32), et dans lequel ledit organe de recouvrement comprend une section d'ajustement serré (154) fournissant un contact avec une section d'ajustement serré (232, 234) de nervures (122, 126) du capot (100) selon l'une des revendications précédentes pour une fixation relative dudit organe de recouvrement (150).

7. Organe de recouvrement (150) selon la revendication 6, dans lequel ledit organe de recouvrement (150) comprend des brides de tirage (172) s'étendant au-delà de ladite section de base (152) pour faciliter l'enlèvement dudit organe de recouvrement dudit récepteur.

8. Organe de recouvrement selon la revendication 6 ou 7, dans lequel en particulier ledit organe de recouvrement (150) est pourvu de doigts (156) s'étendant depuis ladite section de base (152) davantage dans ledit canal de réception (38) pour fixer ledit organe de recouvrement (150) dans ledit canal de réception (38), dans lequel en particulier lesdits doigts (156) sont pourvus de corps encliquetés (158) pour fournir un encliquetage entre lesdits doigts (156) et un évidement (68) agencé dans ledit canal de réception (38), dans lequel en particulier lesdits corps encliquetés (158) sont conçus pour entrer dans une rainure (68) prévue dans ledit canal de réception (38) pour recevoir des billes de verrouillage (62) dudit organe de montage (42) pour verrouiller ledit organe de montage (42) à l'intérieur dudit récepteur (32) .

9. Organe de recouvrement selon les revendications 6 à 8, dans lequel ladite section de base (152) dudit organe de recouvrement (150) est pourvue de saillies latérales (162) aptes à entrer dans des évidements (74) agencés sur des côtés opposés dudit canal de réception (38) dudit récepteur (32) et prévus pour recevoir des saillies (82) correspondantes dudit organe de montage (42) dudit col de boule amovible (40), et/ou dans lequel en particulier ladite section de base (152) est pourvue d'un rebord de couvercle (184) adapté au contour d'une ouverture d'insert (50) dudit récepteur (32), dans lequel en particulier ledit organe de recouvrement (150) comprend des brides de tirage (172) s'étendant au-delà desdites saillies latérales (182) pour faciliter l'enlèvement dudit organe de recouvrement (150) dudit récepteur (32), et/ou dans lequel en particulier ledit organe de recouvrement (150) comprend des brides de tirage (172) agencées sur lesdites saillies latérales (182) et en particulier s'étendant à l'écart desdites saillies latérales (182) sur des côtés desdites saillies latérales (182) à l'opposé de ladite section de base (152).

10. Organe de recouvrement selon l'une des revendications 6 à 9, dans lequel ledit organe de recouvrement (150) comprend des retraits (174) agencés sur ladite section de base (152) pour fournir un espacement entre ladite section de base (152) et ledit canal de réception (38) permettent l'évacuation d'une matière résiduelle ou d'une humidité depuis l'intérieur dudit canal de réception à travers ledit espacement vers l'extérieur du récepteur (38), dans lequel en particulier lesdits retraits (174) sont agencés dans la zone d'une transition d'un rebord de couvercle (184) d'une dite section de base (152) et une portion de pied (178) de ladite section de base (152).

11. Unité capot-recouvrement comprenant un capot (100) selon au moins l'une des revendications 1 à 5 et un organe de recouvrement (150) selon au moins l'une des revendications 6 à 10, dans laquelle ledit capot (100) et ledit organe de recouvrement (150) sont tous les deux conçus de sorte que l'organe de recouvrement (150) puisse être inséré à travers une ouverture d'accès (114) dans ledit espace intérieur (116) dudit capot (100) et fixé dans ledit espace intérieur (116) et dans lequel ledit organe de recouvrement (150) est fixé dans ledit capot (100) par verrouillage de force.

12. Unité capot-recouvrement selon la revendication 11, dans laquelle en particulier ledit verrouillage de force dudit organe de recouvrement (150) est réalisé par interaction entre la section de base (152) dudit organe de recouvrement (150) et des sections de nervures (122, 126) s'étendant dans ledit espace de réception (116) dudit capot (100).

13. Unité capot-recouvrement selon la revendication 11 ou 12, dans laquelle ledit capot (100) et ledit organe de recouvrement (150) sont conçus de sorte que ledit organe de recouvrement (150) ferme sensiblement ladite ouverture d'accès (114) dudit capot (100) .

14. Unité capot-recouvrement selon l'une des revendications 11 à 13, dans laquelle, dans le cas où ledit organe de recouvrement (150) est inséré et fixé dans ledit capot (100), ledit organe de recouvrement (150) et ledit capot (100) peuvent être supportés par une surface de plan commun (222).

15. Attelage de remorque amovible (30) comprenant un récepteur (32) monté fixement sur une carrosserie (12) d'une voiture (10) et un col de boule (40) comportant un organe de montage (42) qui peut être inséré et fixé dans un canal de réception (38) et détaché dudit canal de réception (38) dudit récepteur (32), dans lequel ledit attelage de remorque amovible (30) comprend un capot (100) selon au moins l'une des revendications 1 à 5 et/ou un organe de recouvrement (150) selon les revendications 6 à 10, et dans lequel en particulier ledit capot (100) et ledit organe de recouvrement (150) peuvent être combinés dans au moins l'une de ladite unité capot-recouvrement (220) selon les revendications 11 à 14.
